# EUROPEAN PATENT APPLICATION

(11) **EP 1 760 994 A1**
(43) Date of publication of application: **07.03.2007**
(21) Application number: 06015253.5
(22) Date of filing: 21.07.2006
(51) Int. Cl.: H04M 1/02

(54) **Foldable portable electronic device with dual hinge means**

(30) Priority: 30.08.2005 CN 200510099606
(71) Applicant: BenQ Corporation, Gueishan Hsiang Taoyuan Shien (TW)
(72) Inventor: Pan, Long-Jyh, Shijr City Taipei (TW)
(74) Representative: Hager, Thomas Johannes

(57) **Abstract**

A portable electronic device (10) including a first body (11), a second body (12) and a hinge (13) is provided. The hinge (13) includes a carrier, a movable element, an elastomer, a first rotate element and a second rotate element. The elastomer disposed between the carrier and the movable element for enabling the movable element to move reciprocally along an extended direction of the first shaft. The second shaft penetrates through the fourth hole for enabling the second cam to contact with the first cam. The second body is coupled to second rotate element. When the second rotate element rotates to a predetermined position, the second cam abuts against the first cam for enabling the elastomer to provide an elastic force between the carrier and the movable element. The elastic force is for enabling the second rotate element to drive the first rotate element to move synchronously.

## Description

This application claims the benefit of People's Republic of China application Serial No. 200510099606.6, filed August 30, 2005, the subject matter of which is incorporated herein by reference.

### BACKGROUND OF THE INVENTION

### Field of the Invention

The invention relates in general to an electronic device, and more particularly to a portable electronic device which is flipped or folded via a dual hinge.

### Description of the Related Art

Living in today's society where science and technology advance rapidly, portable electronic devices have become indispensable to modern people in their daily lives. Particularly, the mobile phone, possessing the features of lightweight, slimness, compactness and portability, enables its user to communicate with others whenever and wherever it is needed.

Conventional mobile phones can be categorized into flip type and slide type. In the case of the flip phone, a hinge is used to connect a first body and a second body for enabling the first body to be opened from or closed to the second body relatively. In the case of the slide phone, a slide module is disposed between a first casing and a second casing for enabling the first casing to slide against the second casing relatively.

However, the conventional hinge can only enable the first body and the second body to be flipped or folded to a fixed position directly. Such operation may easily make the user feel rigid and boring, thus largely reducing the practicality of the portable electronic device.

### SUMMARY OF THE INVENTION

It is therefore an object of the invention to provide a portable electronic device. The design of a dual hinge including a first cam and a second cam not only enables a first body and a second body to be flipped or folded smoothly, but also enables the first body and the second body which are only half-open or half-closed to be automatically opened or closed completely. Therefore, the design of the dual hinge of the invention largely transcends the restriction of conventional hinge, which requires the first body and the second body to be flipped or folded to a fixed position directly, and really increases the practicality of the portable electronic device.

The invention achieves the above-identified object by providing a portable electronic device including a first body, a second body and a hinge. The hinge includes a carrier, a movable element, an elastomer, a first rotate element and a second rotate element. The carrier has a first shaft and a second shaft. The movable element has a first hole, a second hole and a first cam. The second hole penetrates through the first cam. The first shaft and the second shaft penetrate through the first hole and the second hole, respectively. The elastomer is disposed between the carrier and the movable element for enabling the movable element to move reciprocally along an extended direction of the first shaft. The first rotate element has a third hole penetrated by the first shaft. The first body is coupled to the first rotate element. The second rotate element has a fourth hole and a second cam. The fourth hole penetrates through the second cam. The second shaft penetrates through the fourth hole for enabling the second cam to contact with the first cam. The second body is coupled to the second rotate element. When the second rotate element rotates to a predetermined position, the second cam abuts against the first cam for enabling the elastomer to provide an elastic force between the carrier and the movable element. The elastic force enables the second rotate element to drive the first rotate element to move synchronously.

The invention further achieves the above-identified object by providing a portable electronic device including a first body, a second body and a hinge. The first body has a first positioning hole. The second body has a second positioning hole. The hinge includes a carrier, a movable element, an elastomer, a first rotor, a second rotor, a first gear and a second gear. The carrier has a first shaft and a second shaft. The movable element has a first hole, a second hole and a first cam. The second hole penetrates through the first cam. The first shaft and the second shaft penetrate through the first hole and the second hole, respectively. The elastomer is disposed between the carrier and the movable element for enabling the movable element to move reciprocally along an extended direction of the first shaft. The first rotor has a third hole, a third shaft and a first positioning bolt opposite to the third shaft. The third hole penetrates through the third shaft and the first positioning bolt. The third shaft is plugged into the first hole. The first gear has a third positioning hole. The first positioning bolt penetrates through the third positioning hole to be plugged into the first positioning hole for enabling the first body to be coupled to the first rotor. The second rotor has a fourth hole, a second positioning bolt and a second cam opposite to the second positioning bolt. The fourth hole penetrates through the second positioning bolt and the second cam. The second shaft penetrates through the fourth hole for enabling the second cam to contact with the first cam. The second gear is engaged with the first gear, and has a fourth positioning hole. The second positioning bolt penetrates through the fourth positioning hole to be plugged into the second positioning hole. When the second rotor rotates to a predetermined position, the second cam abuts against the first cam for enabling the elastomer to provide an elastic force between the carrier and the movable element. The elastic force enables the second rotor to drive the first rotor to move synchronously.

The invention further achieves the above-identified object by providing a portable electronic device including a first body, a second body and a hinge. The hinge comprises a carrier, a movable element, an elastomer, a first rotate element and a second rotate element. One end of the carrier has a first shaft and a second shaft. The movable element has a first hole, a second hole and a first cam. The first shaft penetrates through the first hole. The second shaft penetrates through the second hole and the first cam. The elastomer is disposed between the carrier and the movable element for enabling the movable element to move reciprocally along an extended direction of the first shaft. The first rotate element connects the first shaft. The first body couples to the first rotate element. The second rotate element has a second cam. The second cam contacts with the first cam. The second body couples to the second rotate element. When the first body rotates with respective to the second body, the second cam abuts against the first cam for enabling the elastomer to provide an elastic force between the carrier and the movable element.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1 is a 3-D assembly diagram illustrating a portable electronic device being at an open state according to a preferred embodiment of the invention;

FIG. 2 illustrates a 3-D exploded diagram of the portable electronic device of FIG. 1;

FIG. 3 illustrates an enlarged exploded diagram of a hinge and a connecting element of FIG. 2;

FIG. 4 illustrates an assembly diagram of part of the constituting elements of the hinge of FIG. 3;

FIG. 5 illustrates the hinge of FIG. 4 in the absence of a hollowed casing;

FIG. 6 illustrates the first cam and the second cam of FIG. 5 being at an unstable state with convex-to-convex and concave-to-concave correspondence;

FIG. 7 illustrates the first cam and the second cam of FIG. 6 being at a stable state with concave-to-convex correspondence; and

FIG. 8 is a 3-D assembly diagram illustrating the portable electronic device of FIG. 1 being at a closed state.

### DETAILED DESCRIPTION OF THE INVENTION

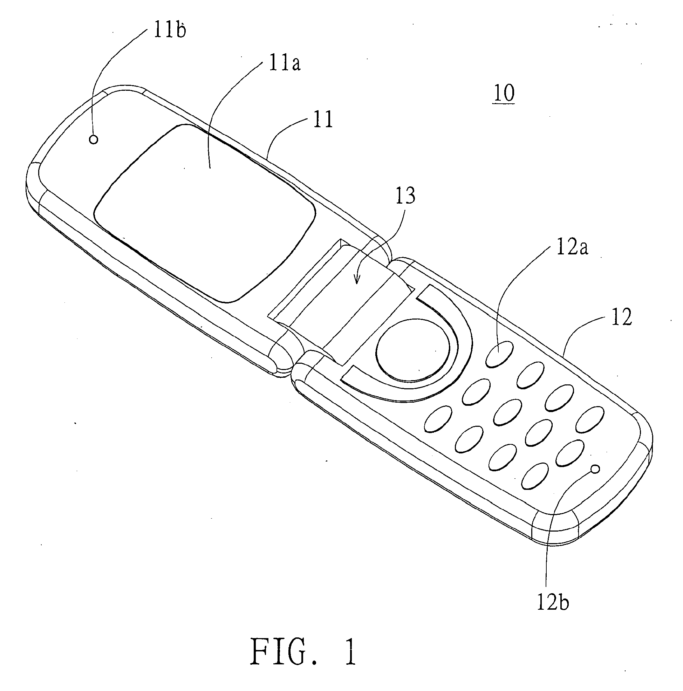

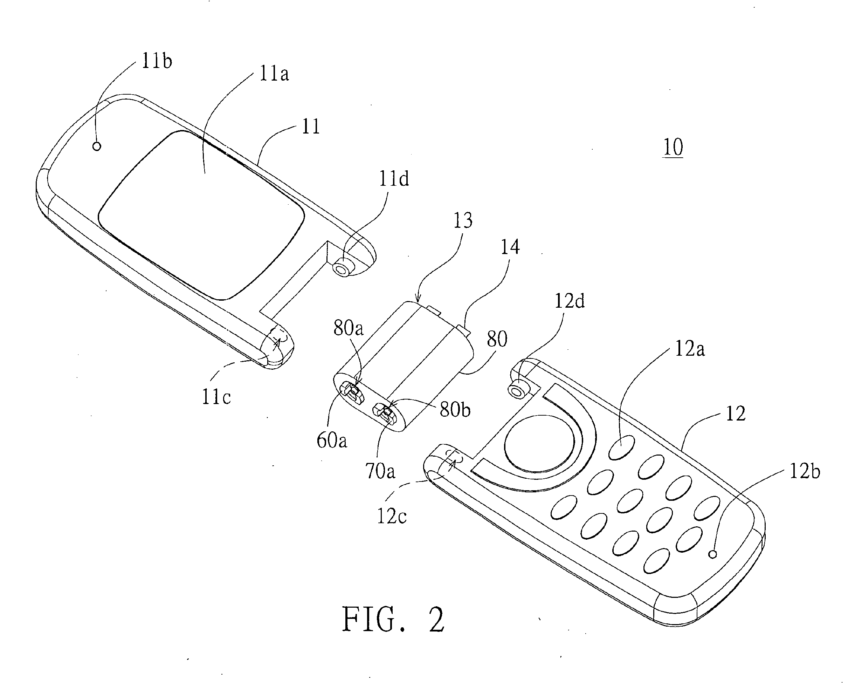

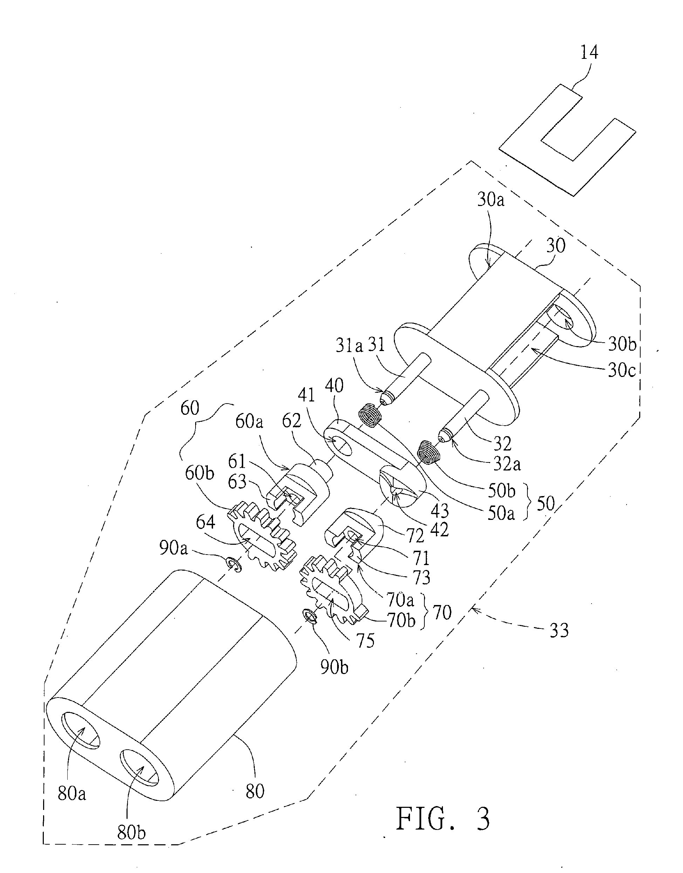

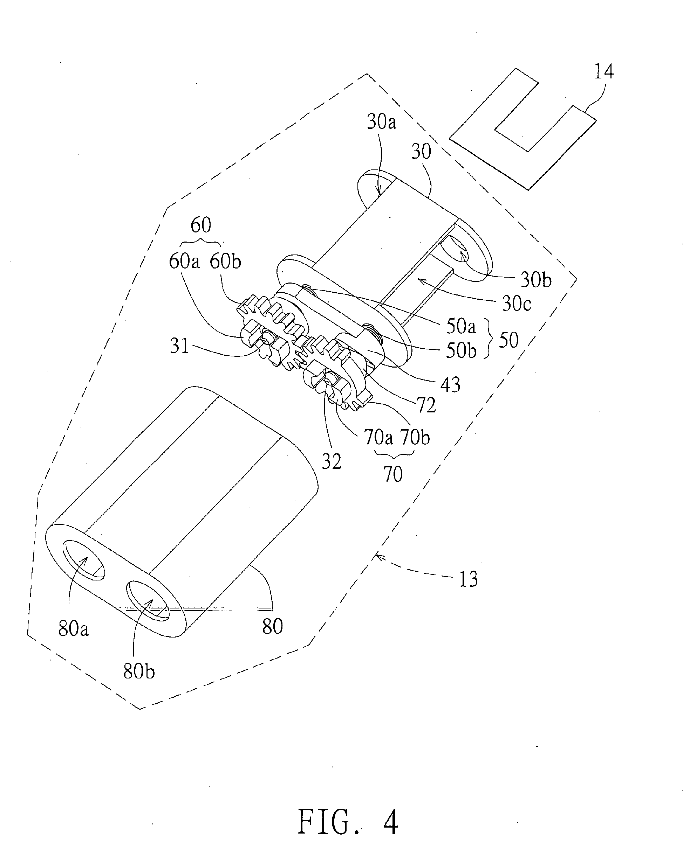

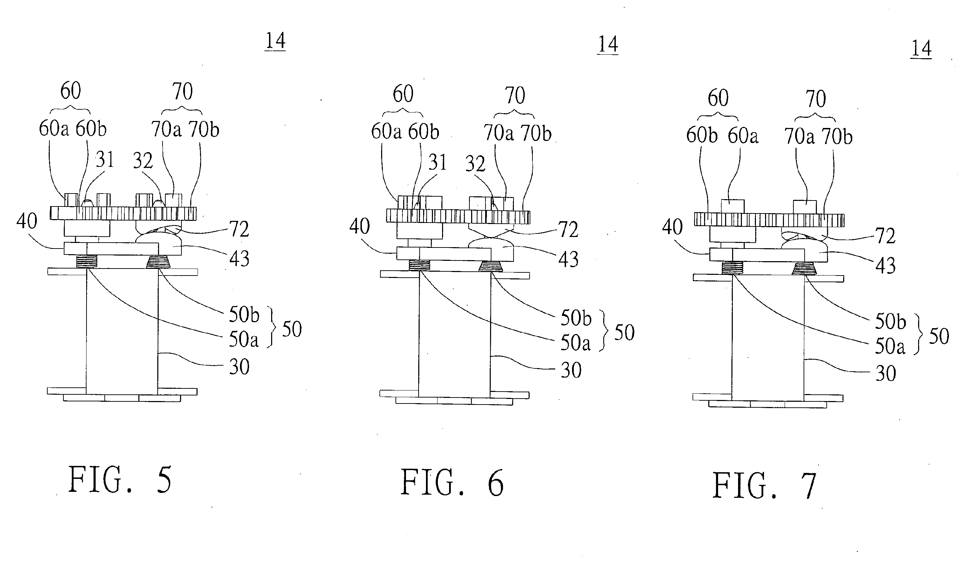

Referring to FIGS. 1~5. FIG. 1 is a 3-D assembly diagram illustrating a portable electronic device being at an open state according to a preferred embodiment of the invention. FIG. 2 illustrates a 3-D exploded diagram of the portable electronic device of FIG. 1. FIG. 3 illustrates an enlarged exploded diagram of a hinge and a connecting element of FIG. 2. FIG. 4 illustrates an assembly diagram of part of the constituting elements of the hinge of FIG. 3. FIG. 5 illustrates the hinge of FIG. 4 in the absence of a hollowed casing and in a stable state of being concave-to-convex. In FIGS. 1~4, the portable electronic device 10 includes a first body 11, a second body 12 and a hinge 13. The hinge 13 is a dual hinge for enabling the first body 11 and the second body 12 to rotate relatively. As for how the hinge 13 enables the first body 11 and the second body 12 to rotate relatively to an open state or a closed state is disclosed below. The constituting elements of the hinge 13 are disclosed first.

As shown in FIGS. 3-5, the hinge 13 at least includes a carrier 30, a movable element 40, an elastomer 50, a first rotate element 60 and a second rotate element 70. One end of the carrier 30 has a first shaft 31 and a second shaft 32. The first shaft 31 and the second shaft 32 are disposed substantially parallel to each other. The movable element 40 has a first hole 41, a second hole 42 and a first cam 43. The second hole 42 penetrates through the first cam 43. The first shaft 31 and the second shaft 32 respectively penetrate through the first hole 41 and the second hole 42 for enabling the movable element 40 to be coupled to the carrier 30. The elastomer 50 is disposed between the carrier 30 and the movable element 40 for enabling the movable element 40 to move reciprocally along an extended direction of the first shaft 31 and the second shaft 32. The first rotate element 60 has a third hole 61. The third hole 61 is penetrated by the first shaft 31. The first body 11 is coupled to the first rotate element 60 for enabling the first body 11 and the first rotate element 60 to move synchronously. The second rotate element 70 has a fourth hole 71 and a second cam 72. The fourth hole 71 penetrates through the second cam 72. The second shaft 32 penetrates through the fourth hole 71 for enabling the second cam 72 to contact with the first cam 43. The second rotate element 70 enables the first rotate element 60 to move synchronously. The second body 12 is coupled to the second rotate element 70 for enabling the second body 12 and the second rotate element 70 to move synchronously. That is to say, the second body 12 enables the first body 11 to move synchronously via the hinge 13 of the present embodiment of the invention.

As shown in FIG. 1 and FIG. 5, when the first body 11 and the second body 12 are flipped to a first angle, the first cam 43 and the second cam 72 are at a stable state with concave-to-convex correspondence, and the first angle is substantially equal to 180 degrees.

When the user applies a force on the portable electronic device 10 for enabling the second body 12 to be closed to the first body 11, the user does not need to apply the force the second body 12 all way through.. That is to say, when the first body 11 and the second body 12 are half-closed and form a second angle, the second body 12 enables the first body 11 to move synchronously for enabling the second rotate element 70 to rotate to a predetermined position as shown in FIG. 6. The second angle is smaller than the first angle. The second angle is substantially equal to 90 degrees. In FIG. 6, the second cam 72 abuts against the first cam 43, and the first cam 43 and the second cam 72 are at an unstable state with convex-to-convex and concave-to-concave correspondence. Since the first rotate element 60 and the second rotate element 70 rotate but do not move, the movable element 40 will move towards the carrier 30 and compress the elastomer 50 for enabling the elastomer 50 to provide an elastic force between the carrier 30 and the movable element 40.

When the user continues to slightly apply a force on the portable electronic device 10, the convex-to-convex and concave-to-concave correspondence between the first cam 43 and the second cam 72 is lifted. That is, when the second rotate element 70 rotates to a predetermined position, the elastic force enables the second rotate element 70 to drive the first rotate element 60 to move synchronously due to the slope effect between the elastic force of the elastomer 50 and the first cam 43 and the second cam 72. As a result, the second body 12 enables the first body 11 to move synchronously, and the user does not need to keep applying a force on the portable electronic device 10.

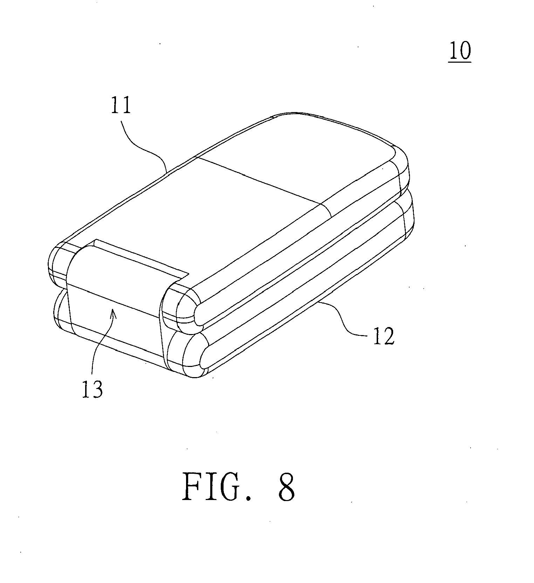

As shown in FIG. 7, when the second rotate element 70 enables the first rotate element 60 to move synchronously to a stable state in which the correspondence between the first cam 43 and the second cam 72 becomes concave-to-convex, the movable element 40 returns to its original position, the elastomer 50 is restored, and the first body 11 and the second body 12 are closed to form a third angle as shown in FIG. 8. The third angle, which is smaller than the second angle and the first angle, is substantially equal to 0 degree.

The detailed constituting elements of the first rotate element 60 and the second rotate element 70 of the present embodiment of the invention and how the hinge 13 is movably coupled to the first body 11 and the second body 12 are discussed below. However, the technology of the present embodiment of the invention is not limited thereto. The first body 11 and the second body 12 have a first positioning hole 11c and a second positioning hole 12c, respectively. The first rotate element 60 further includes a first rotor 60a and a first gear 60b. The first rotor 60a has a third hole 61, a third shaft 62 and a first positioning bolt 63 opposite to the third shaft 62. The third hole 61 penetrates through the third shaft 62 and the first positioning bolt 63. The third shaft 62 is plugged into the first hole 41. The first gear 60b has a third positioning hole 64. The first positioning bolt 63 penetrates through the third positioning hole 64 to be plugged into the first positioning hole 11c for enabling the first body 11 to be coupled to the first rotate element 60. The second rotate element 70 further includes a second rotor 70a and a second gear 70b. The second rotor 70a has a fourth hole 71, a second positioning bolt 73 and a second cam 72 opposite to the second positioning bolt 73. The fourth hole 71 penetrates through the second positioning bolt 73. The second gear 70b is engaged with the first gear 60b, and has a fourth positioning hole 75. The second positioning bolt 73 penetrates through the fourth positioning hole 75 to be plugged into the second positioning hole 12c for enabling the second body 12 to be coupled to the second rotate element 70.

The radius of the first gear 60b and the radius of the second gear 70b may or may not be the same. In the present embodiment of the invention, the first gear 60b and the second gear 70b are exemplified by having the same radius. When the first gear 60b and the second gear 70b have the same radius, the first gear 60b and the second gear 70b have the same rotation angle, which means that the first body 11 and the second body 12 have the same rotation angle. When the radius of the first gear 60b is different from the radius of the second gear 70b, for example, the radius of the second gear 70b is a half of the radius of the first gear 60b, the rotation angle of the second gear 70b is two times of the rotation angle the first gear 60b. That is, the rotation angle of the second body 12 is two times of the rotation angle of the first body 11. When the portable electronic device 10 needs a large angle for rotation, the radius of the first gear 60b and the radius of the second gear 70b can be adjusted to accordingly.

Besides, the first body 11 and the second body 12 further have a first hinge bolt 11 d and a second hinge bolt 12d, respectively, and the other end of the carrier 30 further has a first hinge hole 30a and a second hinge hole 30b. The first hinge bolt 11d and the second hinge bolt 12d are plugged into the first hinge hole 30a and the second hinge hole 30b, respectively.

As the design of electrically connecting the circuit of the first body 11 and the circuit of the second body 12 via the hinge 13 is exemplified below, it is noted that the technology of the present embodiment of the invention is not limited thereto. The carrier 30 further has an accommodation space 30c. The portable electronic device 10 further includes a connecting element 14. The connecting element 14 passes through the accommodation space 30c, the first hinge hole 30a and the second hinge hole 30b to be extended to the inside of the first body 11 and the second body 12 via the first hinge bolt 11 d and the second hinge bolt 12d for electrically connecting with the circuits inside the first body 11 and the second body 12. For example, the two ends of the connecting element 14 correspondingly penetrate through the hole of the first hinge bolt 11 d and the hole of the second hinge bolt 12d to be extended to the inside of the first body 11 and the second body 12, respectively. The connecting element 14 includes a flexible circuit board, a conductive wire or a coaxial cable. In the present embodiment of the invention, the connecting element 14 is exemplified by a flexible circuit board.

As the design of limiting the range of movement of the movable element 40, the first rotate element 60 and the second rotate element 70 is exemplified below, it is noted that the technology of the present embodiment of the invention is not limited thereto. The terminal of the first shaft 31 and the terminal of the second shaft 32 have a first positioning groove 31 a and a second positioning groove 32a, respectively. The hinge 13 further includes a first positioning element 90a and a second positioning element 90b. The first positioning element 90a is embedded to the first positioning groove 31 a and wound on the first shaft 31 for limiting one end of the movable element 40 and the first rotate element 60 to move within a first fixed range on the first shaft 31. The second positioning element 90b is embedded to the second positioning groove 32a and wound on the second shaft 32 for limiting the other end of the movable element 40 and the second rotate element 70 to move within a second fixed range on the second shaft 32. In the present embodiment of the invention, the first positioning element 90a and the second positioning element 90c are exemplified by two C-shaped rings.

Besides, the elastomer 50 can be a spring, an elastic piece, an elastic rubber, an elastic plastic, an elastic polymer material or the combination thereof. In the present embodiment of the invention, the elastomer 50 includes a first spring 50a and a second spring 50b. The first spring 50a is wound on the first shaft 31 and disposed between the carrier 30 and the movable element 40. The second spring 50b is wound on the second shaft 32 and disposed between the carrier 30 and the movable element 40.

Moreover, the hinge 13 further includes a hollowed casing 80. The hollowed casing 80 is for receiving and enclosing the carrier 30, the elastomer 50, the movable element 40, the first rotate element 60 and the second rotate element 70. Only the first hinge hole 30a, the second hinge hole 30b, and the part of the hinge 13 coupled to the first body 11 and the second body 12 are exposed, so that the objects of protection, good-looking appearance and dust-proof can be achieved. The hollowed casing 80 has a first opening 80a and a second opening 80b. The first positioning bolt penetrates through the first opening 80a to be plugged into the first positioning hole 11c. The second positioning bolt 73 penetrates through the second opening 80b to be plugged into the second positioning hole 12c.

As the assembly process of how the hinge 13 is assembled with the first body 11 and the second body 12 is exemplified by FIG. 5 and disclosed below, it is noted that the technology of the present embodiment of the invention is not limited thereto. When assembling the second body 12 and the hinge 13, the user has to apply a force on the second rotate element 70 first, and then press the second rotate element 70 towards the carrier 30. Since the second cam 72 pushes the first cam 43 for enabling the second spring 50b to be compressed, the first cam 43 will move towards the carrier 30. When the second rotate element 70 is coupled to and matches with the second body 12, the user does not need to apply a force on the second rotate element 70. Due to the rebound of the second spring 50b, the first cam 43 will push the second cam 72 for enabling the second rotate element 70 to be rebounded and coupled to the second body 12.

After the hinge 13 has been assembled with the second body 12, the user can continue to assemble the hinge 13 and the first body 11. When assembling the first body 11 and the hinge 13, the user has to apply a force on the first rotate element 60 first for pressing the first rotate element 60 towards the carrier 30. Meanwhile, the first spring 50a is compressed towards the carrier 30, but the first cam 43 is not affected. When the first rotate element 60 is coupled to and matches with the first body 11, the user does not need to apply a force on the first rotate element 60. Due to the rebound of the first spring 50a, the first rotate element 60 will be rebounded and coupled to the first body 11 for enabling the hinge 13 to be assembled with the first body 11 and the second body 12.

Any one who is skilled in the technology of the present embodiment of the invention will understand that the technology of the present embodiment of the invention is not limited thereto. For example, the first body 11 at least has a display panel 11 a, a receiver 11 b and a battery. The second body 12 at least has a keypad 12a and a microphone 12b. The display panel 11 a and the receiver 11 b are electrically connected to a control unit inside the second body 12 via the connecting element 14. The keypad 12a and the microphone 12b are electrically connected to the above mentioned control unit. Besides, the second body 12 can have at least a display panel and a receiver, and the first body 11 can have at least a keypad, a microphone and a battery. Moreover, the portable electronic device 10 is a mobile phone, and the display panel 11 a is a liquid crystal display (LCD) panel, an organic light emitting diode (OLED) display panel, a plasma display panel (PDP) or an organic electroluminescent device (OELD). With the design of having concave and convex structures between the first cam 43 and the second cam, the first body 11 and the second body can be opened to different angles.

The portable electronic device disclosed in above embodiment of the invention has a dual hinge design for the first cam and the second cam. The design of the dual hinge including the first cam and the second cam not only enables the first body and the second body to be opened or closed smoothly, but also enables the first body and the second body to be automatically and completely opened or closed after having been flipped or folded to a predetermined position. Therefore, the design of the dual hinge of the present embodiment of the invention largely transcends the restriction of conventional hinge which requires the first body and the second body to be flipped or folded to a fixed position directly, and increases the practicality of the portable electronic device.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A portable electronic device, comprising:
a first body;
a second body; and
a hinge, comprising:
a carrier whose one end has a first shaft and a second shaft;
a movable element having a first hole, a second hole and a first cam, wherein the second hole penetrates through the first cam, and the first shaft and the second shaft penetrate through the first hole and the second hole, respectively;
an elastomer disposed between the carrier and the movable element for enabling the movable element to move reciprocally along an extended direction of the first shaft;
a first rotate element having a third hole, wherein the third hole is penetrated by the first shaft, and the first body is coupled to the first rotate element; and
a second rotate element having a fourth hole and a second cam, wherein the fourth hole penetrates through the second cam, the second shaft penetrates through the fourth hole for enabling the second cam to contact with the first cam, and the second body is coupled to the second rotate element;
wherein when the second rotate element rotates to a predetermined position, the second cam abuts against the first cam for enabling the elastomer to provide an elastic force between the carrier and the movable element, and the elastic force enables the second rotate element to drive the first rotate element to move synchronously.

2. The portable electronic device according to claim 1, wherein the first body and the second body respectively have a first positioning hole and a second positioning hole, and the first rotate element further comprises:
a first rotor having the third hole, a third shaft and a first positioning bolt opposite to the third shaft, wherein the third hole penetrates through the third shaft and the first positioning bolt, and the third shaft is plugged into the first hole; and
a first gear having a third positioning hole, wherein the first positioning bolt penetrates through the third positioning hole to be plugged into the first positioning hole for enabling the first body to be coupled to the first rotate element;
wherein the second rotate element further comprises:
a second rotor having the fourth hole, a second positioning bolt and the second cam opposite to the second positioning bolt, wherein the fourth hole penetrates through the second positioning bolt; and
a second gear engaged with the first gear, wherein the second gear has a fourth positioning hole, the second positioning bolt penetrates through the fourth positioning hole to be plugged into the second positioning hole for enabling the second body to be coupled to the second rotate element.

3. The portable electronic device according to claim 2, wherein the radius of the first gear and the radius of the second gear may or may not be the same.

4. The portable electronic device according to claim 2, wherein the hinge further comprising:
a hollowed casing for receiving and enclosing the carrier, the elastomer, the movable element, the first rotate element and the second rotate element, wherein the hollowed casing has a first opening and a second opening, the first positioning bolt penetrates through the first opening to be plugged into the first positioning hole, and the second positioning bolt penetrates through the second opening to be plugged into the second positioning hole.

5. The portable electronic device according to claim 2, wherein the first body and the second body further have a first hinge bolt and a second hinge bolt, respectively, the other end of the carrier further has a first hinge hole and a second hinge hole, and the first hinge bolt and the second hinge bolt are plugged into the first hinge hole and the second hinge hole, respectively.

6. The portable electronic device according to claim 5, wherein the carrier further has an accommodation space, the portable electronic device further comprises:
a connecting element for passing through the accommodation space, the first hinge hole and the second hinge hole to be extended to the inside of the first body and the second body via the first hinge bolt and the second hinge bolt for electrically connecting with the circuits inside the first body and the second body.

7. The portable electronic device according to claim 6, wherein the connecting element comprises a flexible circuit board, a conductive wire or a coaxial cable.

8. The portable electronic device according to claim 1, wherein the terminal of the first shaft and the terminal of the second shaft respectively have a first positioning groove and a second positioning groove, the hinge further comprises:
a first positioning element embedded to the first positioning groove and wound on the first shaft for limiting the movable element and the first rotate element to move within a first fixed range on the first shaft; and
a second positioning element engaged with the second positioning groove and wound on the second shaft for limiting the movable element and the second rotate element to move within a second fixed range on the second shaft.

9. The portable electronic device according to claim 8, wherein the first positioning element and the second positioning element are two C-shaped rings.

10. The portable electronic device according to claim 1, wherein the elastomer comprises:
a first spring wound on the first shaft to be disposed between the carrier and the movable element; and
a second spring wound on the second shaft to be disposed between the carrier and the movable element.

11. The portable electronic device according to claim 1, wherein the elastomer includes a spring, an elastic piece, an elastic rubber, an elastic plastic, an elastic polymer material or the combination thereof.

12. A portable electronic device, comprising:
a first body having a first positioning hole;
a second body having a second positioning hole; and
a hinge, comprising:
a carrier whose one end has a first shaft and a second shaft;
a movable element having a first hole, a second hole and a first cam, wherein the second hole penetrates through the first cam, and the first shaft and the second shaft penetrate through the first hole and the second hole, respectively;
an elastomer disposed between the carrier and the movable element for enabling the movable element to move reciprocally along an extended direction of the first shaft;
a first rotor having a third hole, a third shaft and a first positioning bolt opposite to the third shaft, wherein the third hole penetrates through the third shaft and the first positioning bolt, and the third shaft is plugged into the first hole;
a first gear having a third positioning hole, wherein the first positioning bolt penetrates through the third positioning hole to be plugged into the first positioning hole for enabling the first body to be coupled to the first rotor;
a second rotor having a fourth hole, a second positioning bolt and a second cam opposite to the second positioning bolt, wherein the fourth hole penetrates through the second positioning bolt and the second cam, and the second shaft passes through the fourth hole for enabling the second cam to contact with the first cam; and
a second gear engaged with the first gear, wherein the second gear has a fourth positioning hole, the second positioning bolt penetrates through the fourth positioning hole to be plugged into the second positioning hole;
wherein when the second rotor rotates to a predetermined position, the second cam abuts against the first cam for enabling the elastomer to provide an elastic force between the carrier and the movable element, and the elastic force enables the second rotor to drive the first rotor to move synchronously.

13. The portable electronic device according to claim 12, wherein the radius of first gear and the radius of the second gear may or may not be the same.

14. The portable electronic device according to claim 12, wherein the hinge further comprises:
a hollowed casing for receiving and enclosing part of the carrier, the elastomer, the movable element, the first rotor, the second rotor, the first gear and the second gear, wherein the hollowed casing has a first opening and a second opening, the first positioning bolt penetrates through the first opening to be plugged into the first positioning hole, and the second positioning bolt penetrates through the second opening to be plugged into the second positioning hole.

15. The portable electronic device according to claim 12, wherein the first body and the second body further respectively have a first hinge bolt and a second hinge bolt, the other end of the carrier further has a first hinge hole and a second hinge hole, and the first hinge bolt and the second hinge bolt are plugged into the first hinge hole and the second hinge hole, respectively.

16. The portable electronic device according to claim 15, wherein the carrier further has an accommodation space, and the portable electronic device further comprises:
a connecting element for passing through the accommodation space, the first hinge hole and the second hinge hole to be extended to the inside of the first body and the second body via the first hinge bolt and the second hinge bolt for electrically connecting with the circuits inside the first body and the second body.

17. The portable electronic device according to claim 12, wherein the terminal of the first shaft and the terminal of the second shaft respectively have a first positioning groove and a second positioning groove, and the hinge further comprises:
a first positioning element embedded to the first positioning groove and wound on the first shaft for limiting the movable element and the first rotate element to move within a first fixed range on the first shaft; and
a second positioning element engaged with the second positioning groove and wound on the second shaft for limiting the movable element and the second rotate element to move within a second fixed range on the second shaft.

18. The portable electronic device according to claim 17, wherein the first positioning element and the second positioning element are two C-shaped rings.

19. The portable electronic device according to claim 12, wherein the elastomer comprising:
a first spring wound on the first shaft to be disposed between the carrier and the movable element; and
a second spring wound on the second shaft to be disposed between the carrier and the movable element.

20. The portable electronic device according to claim 12, wherein the elastomer includes a spring, an elastic piece, an elastic rubber, an elastic plastic, an elastic polymer material or the combination thereof.

21. A portable electronic device, comprising:
a first body;
a second body; and
a hinge, comprising:
a carrier, one end of the carrier having a first shaft and a second shaft;
a movable element having a first hole, a second hole and a first cam, the first shaft penetrating through the first hole and the second shaft penetrating through the second hole and the first cam;
an elastomer disposed between the carrier and the movable element for enabling the movable element to move reciprocally along an extended direction of the first shaft;
a first rotate element connecting the first shaft, and the first body coupling to the first rotate element; and
a second rotate element having a second cam, the second cam contacting with the first cam, and the second body coupling to the second rotate element;
wherein when the first body rotates with respective to the second body, the second cam abuts against the first cam for enabling the elastomer to provide an elastic force between the carrier and the movable element.

22. The portable electronic device according to claim 21, the first rotate element further comprising:
a first gear, the first gear connecting the first shaft; and
the second rotate element further comprising:
a second gear engaged with the first gear, the second gear connecting the second shaft;
wherein the elastic force enables the second gear to drive the first gear to rotate synchronously.

23. The portable electronic device according to claim 22, wherein the radius of the first gear and the radius of the second gear may or may not be the same.

24. The portable electronic device according to claim 21, wherein the elastomer comprises:
a first spring wound on the first shaft; and
a second spring wound on the second shaft.
